# EUROPÄISCHE PATENTSCHRIFT

(11) **EP 2 090 075 B1**
(45) Veröffentlichungstag und Bekanntmachung des Hinweises auf die Patenterteilung: **22.06.2016**
(21) Anmeldenummer: 07820687.7
(22) Anmeldetag: 28.09.2007
(51) Int. Cl.: H04L 29/08

(54) **VERFAHREN UND ANORDNUNG ZUM AKTUALISIEREN VON PROGRAMMDATEN EINES GERÄTS ÜBER EINE UP3I-SCHNITTSTELLE**
METHOD AND ARRANGEMENT FOR UPDATING PROGRAM DATA OF A DEVICE VIA A UP3I INTERFACE
PROCÉDÉ ET DISPOSITIF D'ACTUALISATION DES DONNÉES DE PROGRAMME D'UN APPAREIL PAR UNE INTERFACE UP3I

(30) Priorität: 29.09.2006 DE 102006046090
(43) Veröffentlichungstag der Anmeldung: 19.08.2009
(73) Patentinhaber: Océ Printing Systems GmbH & Co. KG, 85586 Poing (DE)
(72) Erfinder: WEBER, Johannes, 85586 Poing (DE); STEIGERWALD, Johannes, 85435 Erding (DE)
(74) Vertreter: Schaumburg und Partner Patentanwälte mbB
(86) Internationale Anmeldenummer: PCT/EP2007/060300
(87) Internationale Veröffentlichungsnummer: WO 2008/037790

(56) Entgegenhaltungen:
- WO-A-03/069548
- WO-A-2004/013748
- DE-A1- 10 245 530
- US-A1- 2003 234 954
- US-A1- 2005 055 476
- "UP3i - Universal printer pre- and post-processing interface"[Online] 2. November 2004 (2004-11-02), Seiten 1-240, XP002472935 Gefunden im Internet: URL:http://www.up3i.org/download/up3i120.p df> [gefunden am 2008-03-14] in der Anmeldung erwähnt

## Beschreibung

Die Erfindung betrifft ein Verfahren und eine Anordnung zum Aktualisieren von Programmdaten über eine UP³I-Schnittstelle. Die im Gerät gespeicherten Programmdaten werden durch Aktualisierungsdaten mit aktualisierten Programmdaten aktualisiert. Ferner sind Computerprogrammprodukte zum Durchführen des Verfahrens angegeben.

Moderne Hochleistungsdruck- oder Hochleistungskopiersysteme mit Druckleistungen von > 100 Blatt DIN A4 pro Minute und mit Druckgeschwindigkeiten von bis zu > 1 m/s umfassen Vor- und/oder Nachverarbeitungseinheiten, die vorzugsweise als separate Baueinheiten ausgeführt sind und die mit mindestens einer Bilderzeugungseinheit gekoppelt sind. Das zu bedruckende Trägermaterial wird nacheinander von der Vorverarbeitungseinheit/den Vorverarbeitungseinheiten, der Bilderzeugungseinheit/den Bilderzeugungseinheiten sowie der Nachverarbeitungseinheit/den Nachverarbeitungseinheiten verarbeitet. Die Bilderzeugungseinheiten sind vorzugsweise Hochleistungsdrucker oder Hochleistungskopierer.

Sowohl die Bilderzeugungsprozesse zum Erzeugen der gewünschten Druckbilder auf blattförmigem Trägermaterial oder auf bahnförmigem Trägermaterial als auch die Vor- und Nachverarbeitungsprozesse zum Verarbeiten des Trägermaterials werden auf Grund gestiegener Anforderungen an die Druckerzeugnisse umfangreicher und anspruchsvoller. Zusätzlich besteht der Wunsch und die Forderung, Geräte verschiedener Hersteller in einem Verarbeitungsablauf zum Verarbeiten des Trägermaterials kombinieren zu können. Zum Erfüllen der gestiegenen Anforderungen an den Verarbeitungsablauf sind im Stand der Technik Druckauftragsbegleitdaten, so genannte Job-Ticket-Daten vorgesehen, die zusätzlich zu einem Druckdatenstrom bzw. Dokumentendatenstrom zwischen mehreren Software- und/oder Hardware-Systemen ausgetauscht werden. Die Job-Ticket-Daten werden vorzugsweise in einer separaten Datei gespeichert und entsprechen vorzugsweise einem als JDF bekannten Job-Definitionsformat. Zu diesem Job-Definitionsformat ist ein korrespondierendes Job-Nachrichtenformat bekannt, das als JMF - Job Messaging Format bezeichnet wird. Ein Industriekonsortium hat die JDF-Spezifikation zum Austausch von Datenformaten im Druckprozess vereinbart, die zum Zeitpunkt der vorliegenden Patentanmeldung in der Version 1.3 vom 30. September 2005 über die Internet-Seite http://www.cip4.org herunter geladen werden kann.

Der Datenaustausch zwischen den Hochleistungsdruckern oder Hochleistungskopierern sowie zwischen Vor- und Nachverarbeitungseinheiten hat ein Industriekonsortium eine eigens dafür spezialisierte Datenschnittstelle standardisiert, die als UP³I (Universal Printer-, Pre- and Post-Processing Interface) bekannt ist. Mit Hilfe der UP³I-Datenschnittstellen ist der Austausch von Steuerdaten und Verarbeitungsinformationen zwischen Druckgeräten und mit diesen Druckgeräten kombinierten Vor- und Nachverarbeitungsgeräten sowie Bedieneinheiten einfach möglich, indem die jeweils für diese Geräte typischen Steuerungsbefehle in den Schnittstellenkommandos standardisiert werden. Einzelheiten zu dieser UP³I-Datenschnittstelle sowie der Standard zur Definition der UP³I-Schnittstelle in der Version 1.20 vom 2. November 2004 sind auf der Internet-Seite http://www.up3i.org zum Zeitpunkt der Anmeldung veröffentlicht. In dem eine grafische Benutzeroberfläche (Graphical User Interface-GUI) betreffenden Kapitel 4.4.5 des Standards wird erwähnt, dass ein Remote Firmware Upgrade unter Nutzung des UP³I -file transfer frames möglich ist.

In einem entsprechenden Drucksystem haben die gekoppelten Einheiten, z. B. eine Vorverarbeitungseinheit, eine Nachverarbeitungseinheit und eine Bilderzeugungseinheit des Druck- oder Kopiersystems, jeweils eine zum Übertragen von Daten gemäß dem UP³I-Protokoll vorgesehene, als UP³I-Schnittstelle angepasste Datenverarbeitungseinheit, insbesondere einen geeigneten UP³I-Schnittstellencontroller. Diese Datenverarbeitungseinheiten können jeweils Daten entsprechend dem UP³I-Protokoll interpretieren und insbesondere die für das jeweilige UP³I-fähige Gerät des Druck-oder Kopiersystems relevanten Steuerungs- und Statusinformationen erkennen bzw. selektieren.

Es können UP³I-Schnittstellencontroller mit einer Firmware vorgesehen sein, bei deren Abarbeitung eine entsprechende UP³I-Schnittstellenfunktionalität durch den UP³I-Schnittstellencontroller bereitgestellt wird.

Die von einer UP³I-Schnittstelle aus dem UP³I-Datenstrom selektierten UP³I-Steuerdaten werden als Steuer- und Statusinformationen an eine gerätespezifische Steuereinheit der jeweiligen Vorverarbeitungseinheit, Nachverarbeitungseinheit oder Bilderzeugungseinheit des Druck- oder Kopiersystems zur Verfügung gestellt und von dieser ggf. in geräteinterne Steuerinformationen umgesetzt. Ferner setzt die UP³I-Schnittstelle jeweils Steuer- und Statusinformationen der Vorverarbeitungseinheit, Nachverarbeitungseinheit bzw. Bilderzeugungseinheit des Druck- oder Kopiersystems in UP³I-Steuerdaten um. Diese UP³I-Steuerdaten werden dann über das UP³I-Bussystem an mindestens eine weitere UP³I-Schnittstelle einer weiteren Vorverarbeitungseinheit, Nachverarbeitungseinheit und/oder Bilderzeugungseinheit des Druck- oder Kopiersystems übertragen.

Alle genannten Dokumente und Veröffentlichungen werden hiermit durch Bezugnahme in die vorliegende Beschreibung aufgenommen. Die in diesen Dokumenten und Publikationen beschriebenen Verfahren, Systeme und Maßnahmen können in Verbindung mit der vorliegenden Erfindung vorteilhaft angewendet werden.

Aufgabe der Erfindung ist es, ein Verfahren und eine Anordnung zum Aktualisieren von Programmdaten in einem Gerät, das eine UP3I-Schnittstelle aufweist, anzugeben, bei denen die Aktualisierung der Programmdaten auf einfache Art und Weise möglich ist.

Diese Aufgabe wird durch ein Verfahren mit den Merkmalen des Patentanspruchs 1 sowie durch eine Anordnung mit den Merkmalen des Patentanspruchs sowie durch ein Computerprogrammprodukt mit den Merkmalen des Patentanspruchs 24 gelöst. Vorteilhafte Weiterbildungen der Erfindung sind in den abhängigen Patentansprüchen angegeben.

Durch ein Verfahren mit den Merkmalen des Patentanspruchs 1 kann erreicht werden, dass Aktualisierungsdaten mit zu aktualisierende Programmdaten direkt über die UP³I-Schnittstelle zu einer Steuereinheit des Geräts übertragen werden, wobei es nicht nötig ist, dass die übertragenen Aktualisierungsdaten als gerätespezifische UP³I-Steuerdaten gemäß dem UP³I-Schnittstellenprotokoll erkannt und interpretiert werden. Durch dieses Verfahren können auch die Programmdaten von Steuereinheiten des Geräts aktualisiert werden, die unabhängig von UP³I-Steuerungsbefehlen arbeiten.

Der Erfindung liegt die Erkenntnis zugrunde, dass Programmdaten, wie z. B. Firmwaredaten oder Programmdaten zum Bereitstellen von Anwendungsprogrammen bzw. von Steuerprogrammen, über eine UP³I-Schnittstelle einfach und sicher an Geräte eines Druck- oder Kopiersystems übertragen werden können. Vorzugsweise werden die unteren Protokollschichten, die zur Übertragung und Verarbeitung von UP³I-Steuerdaten dienen, auch zum Übertragen der Programmdaten über die UP³I-Schnittstelle genutzt. Dadurch können die Programmdaten einfach zu dem Gerät übertragen werden, dessen abzuarbeitende Programmdaten aktualisiert werden sollen. Zusätzliche Datenleitungen und Übertragungsprotokolle sind dafür nicht erforderlich.

Eine Aktualisierung der von dem jeweiligen Gerät abzuarbeitende Programmdaten kann somit örtlich entfernt vom zu aktualisierenden Gerät und insbesondere zentralisiert bzw. ferngesteuert initiiert und durchgeführt werden. Insbesondere kann das Aktualisieren der Programmdaten über ein lokales und/oder globales Netzwerk erfolgen, wodurch keine separate physikalische Datenverbindung zum Gerät vorhanden sein muss. Ein Serviceeinsatz vor Ort kann dadurch entfallen. Die Aktualisierung der Programmdaten kann von einer beliebigen Datenverarbeitungseinheit, insbesondere vom Druckcontroller, einer anderen Steuereinheit eines Druckers und/oder von einem mit dem Drucker oder der UP³I-Schnittstelle bzw. dem UP³I-Bus mittelbar oder unmittelbar verbundenem anderen Computer (Laptop, Server, Client-PC, Host), initiiert und durchgeführt werden. Die zum Aktualisieren erforderlichen Aktualisierungsdaten können von der die Aktualisierung initiierenden Datenverarbeitungseinheit über ein Netzwerk, vorzugsweise das Internet, zu einer weiteren Datenverarbeitungseinheit übertragen werden. Diese weitere Datenverarbeitungseinheit weist eine erste UP³I-Schnittstelle auf oder ist mit dieser zum Datenaustausch verbunden. Die Aktualisierungsdaten werden von der weiteren Datenverarbeitungseinheit über die erste UP³I-Schnittstelle zumindest zu einer zweiten UP³I-Schnittstelle übertragen, die dem Gerät zugeordnet ist, dessen Programmdaten zu aktualisieren sind.

Weiterhin ist erkannt worden, dass nicht-gerätespezifische UP³I-Datenpakete geeignet sind und dazu verwendet werden können, erforderliche Aktualisierungsdaten zum Aktualisieren von Programmdaten zu übertragen. Eine spezifikationskonforme Interpretation von Daten, die in den nicht-gerätespezifischen UP³I-Datenpaketen enthalten sind, bewirkt keine Änderung des Zustandes des Gerätes. Insbesondere werden durch die in den UP³I-Datenpaketen enthaltenen Daten keine Steueraktionen ausgeführt und keine Einstellwerte geändert. Die in den nicht gerätespezifischen UP³I-Datenpaketen übertragenen Daten sind ohne eine weitere Verarbeitung wirkungsneutral. Ist vorgesehen, dass in den nicht-gerätespezifischen UP³I-Datenpaketen Aktualisierungsdaten oder alternativ andere Daten übertragen werden, so ist es vorteilhaft die UP³I-Datenpakete und/oder die darin enthaltenen Daten mit einer Kennung zu versehen, um die jeweils enthaltenen Daten entsprechend zu erkennen und zuordnen zu können. Diese Kennung oder eine zur Kennzeichnung verwendete Information kann beispielsweise in einen sogenannten Header eingefügt werden, der zusätzlich zu den Daten mit Hilfe der UP³I-Datenpakete übertragen wird sowie alternativ oder zusätzlich in den Daten enthalten sein kann. Ferner kann ein Handhabungsprogramm zum Aktualisieren der Programmdaten, d.h. das Ladeprogramm und/oder ein weiteres Handhabungsprogramm, zusammen mit den Aktualisierungsdaten mit Hilfe der UP³I-Datenpakete übertragen werden.

Die nicht-gerätespezifischen UP³I-Datenpakete beinhalten somit außerordentliche Daten, die von der UP³I-Schnittstelle nicht als Steuerbefehle interpretierbar sind. Diese außerordentlichen Daten können jedoch in Steuerbefehle gemäß dem UP³I-Standard eingebettet sein, insbesondere in UP³I Free Page Datenpakete. Die UP³I-Schnittstellen verarbeiten alle Steuerbefehle gemäß dem UP³I-Standard. Die in den nicht-gerätespezifischen UP³I-Datenpaketen enthaltenen Daten (Aktualisierungsdaten) werden von einer UP³I-Schnittstelle jedoch intern nur dann weiterverarbeitet, wenn sie eine spezielle, im UP³I-Standard nicht allgemein standardisierte für die Aktualisierung bzw. Interpretation der Aktualisierungsdaten benötigte Einrichtung in Form von Hardware und/oder Software aufweisen. Dann können sie diese Daten mit entsprechenden Verarbeitungsbefehlen und Steuerinformationen verarbeiten und Programmdaten mit Hilfe der Aktualisierungsdaten aktualisieren. Die nicht im UP³I-Standard spezifizierten Aktualisierungsdaten werden somit mit Hilfe dieser nicht-gerätespezifischen UP³I-Datenpakete quasi "getunnelt" übertragen.

Durch die Verwendung von nicht-gerätespezifischen Datenpaketen, insbesondere von Free-Page-Information-Datenpaketen (Free-Page-Information-Frames), kann verhindert werden, dass die in diesen Datenpaketen enthaltenen Aktualisierungsdaten als UP³I-Steuerinformationen interpretiert werden, was zu Fehlfunktionen oder Funktionsausfällen der UP³I-Schnittstellen sowie der mit diesen Schnittstellen verbundenen Steuereinheiten führen könnte. Alternativ oder zusätzlich kann ein weiterer Datenpakettyp definiert werden, wobei mit Hilfe von Datenpaketen dieses Datenpakettyps Aktualisierungsdaten, insbesondere Firmwaredaten, übertragbar sind. Die Datenpakete des weiteren Datenpakettyps sind dann nicht-gerätespezifische UP³I-Datenpakete im Sinne der Erfindung.

Bei einer Weiterbildung der Erfindung werden sowohl UP³I-Datenpakete mit UP³I-Steuerdaten als auch die UP³I-Datenpakete mit den Aktualisierungsdaten mit Hilfe einer Übertragungsschicht physikalisch zu einer UP³I-Schnittstelle, insbesondere zu einem UP³I-Schnittstellencontroller, übertragen. Ferner können zur UP³I-Schnittstelle übertragene Daten mit Hilfe einer ersten Verarbeitungsschicht als UP³I-Datenpakete interpretiert werden. Die UP³I-Datenpakete können mit Hilfe einer zweiten Verarbeitungsschicht, vorzugsweise einer Anwendungsschicht, weiterverarbeitet werden.

Zwischen der ersten Verarbeitungsschicht und der zweiten Verarbeitungsschicht kann vorzugsweise eine weitere dritte Verarbeitungsschicht vorgesehen werden, mit deren Hilfe eine Handhabung der UP³I-Datenpakete realisiert wird. Mit Hilfe der dritten Verarbeitungsschicht werden die UP³I-Datenpakete entsprechend ihrer Kennzeichnung einzelnen Anwendungsprogrammen der zweiten Verarbeitungsschicht zugeordnet. Die dritte Verarbeitungsschicht kann dabei überprüfen, ob die in den nicht-gerätespezifischen UP³I-Datenpaketen enthaltenen Daten Programmdaten aufweisen und ermittelt diese. Die ermittelten Programmdaten werden einem Anwendungsprogramm als Aktualisierungsdaten zum Aktualisieren der Programmdaten der UP³I-Schnittstelle zugeführt.

Ferner kann eine den Aktualisierungsdaten zugeordneten Information mit zur UP³I-Schnittstelle übertragen werden, durch die eine UP³I-Schnittstelle und/oder ein UP³I-Schnittstellencontroller und/oder eine mit der UP³I-Schnittstelle verbundene Steuereinheit identifizierbar ist, der/dem die Aktualisierungsdaten zuzuführen sind. Dabei wird vorzugsweise vor dem Aktualisieren der Programmdaten überprüft, ob die mit den Aktualisierungsdaten übertragene Identifizierungsinformation mit der UP³I-Schnittstelle, dem UP³I-Schnittstellencontroller und/oder der Steuereinheit übereinstimmt.

Weiterhin kann eine Datenbusverbindung zwischen mehreren UP³I-Schnittstellen vorgesehen werden. Diese Datenbusverbindung kann insbesondere durch einen Firewire-Datenbus nach dem IEEE 1394-Standard ausgeführt werden. Mit Hilfe dieser Firewire-Datenbusverbindung werden Datenpakete mit UP³I-Steuerdaten sowie mit Aktualisierungsdaten übertragen. Diese Datenbusverbindung stellt eine physikalische Übertragungsschicht zum Übertragen von UP³I-Daten bereit. Die Aktualisierungsdaten werden in einem bevorzugten Ausführungsbeispiel der Erfindung jeder an einem UP³I-Datenbus angeschlossenen UP³I-Schnittstelle zugeführt und werden von den UP³I-Schnittstellen zur Weiterverarbeitung selektiert, die dafür angepasst sind.

Bei einem bevorzugten Ausführungsbeispiel werden mittels der UP³I-Schnittstelle Aktualisierungsdaten mit Programmdaten einer Firmware oder mindestens eines Steuerungsprogramms eines Aggregattreibers bzw. Aggregatsteuerungsbausteins aktualisiert. Solche Aggregatsteuerungsbausteine können z. B. zur Papiertransportsteuerung, Fixiersteuerung und/oder Bedienfeldsteuerung eines elektrografischen Druckgeräts vorgesehen sein.

Bereits in einem Speicherbereich des zu aktualisierenden Gerätes oder einer mit der UP³I-Schnittstelle verbundenen Steuereinheit gespeicherte Programmdaten können mit Hilfe der übertragenen Aktualisierungsdaten aktualisiert werden.

Dieses Aktualisieren erfolgt vorzugsweise durch Überschreiben der entsprechenden gespeicherten Programmdaten mit den neuen übertragenen Aktualisierungsdaten durch ein Anwendungsprogramm der zweiten Verarbeitungsschicht. Dazu werden die übertragenen Aktualisierungsdaten dem Anwendungsprogramm der zweiten Anwendungsschicht zugeführt. Das Anwendungsprogramm ist vorzugsweise ein Ladeprogramm zum Ersetzen der Programmdaten oder zumindest eines Teils der bereits vorhandenen Programmdaten. Alternativ kann auch nur der zu aktualisierende Teil der Programmdaten als Aktualisierungsdaten zur UP³I-Schnittstelle übertragen werden.

Die Programmdaten der Firmware oder des Steuerungsprogramms sind vorzugsweise in einem PROM-Speicherbereich des zu aktualisierenden Gerätes oder in einem Speicherbereich einer mit der UP³I-Schnittstelle verbundenen Steuereinheit gespeichert. Diese Programmdaten werden dann bei einem nachfolgenden Start zur Ausführung aus dem PROM-Speicherbereich geladen. Der PROM-Speicherbereich ist vorzugsweise ein EEPROM-Speicherbereich.

Die zur UP³I-Schnittstelle übertragenen Aktualisierungsdaten umfassen eine komplette aktualisierte Programmversion der Firmware und/oder des Steuerprogramms, wobei die im PROM-Speicherbereich gespeicherten Programmdaten der gesamten Firmware und/oder des gesamten Steuerprogramms durch die übertragenen neuen Programmdaten ersetzt werden. Alternativ können nur die Teile der im PROM-Speicherbereich gespeicherten Programmdaten, insbesondere nur ein Teil der Firmware und/oder ein Teil des Steuerprogramms, ersetzt werden, durch den sich die neuen Programmdaten von den im PROM-Speicherbereich bereits gespeicherten Programmdaten unterscheiden. Dies ist insbesondere auch möglich, wenn die Aktualisierungsdaten eine komplette aktualisierte Programmversion der Firmware und/oder des Steuerprogramms umfassen.

Vorteilhaft ist auch, dass überprüft wird, ob die in den UP³I-Datenpaketen enthaltenen Aktualisierungsdaten für das zu aktualisierende Gerät, insbesondere für einen bestimmten Typ und/oder eine bestimmte Konfiguration und/oder einer bestimmten Steuerfunktion einer mit einer UP³I-Schnittstelle verbundenen oder eine UP³I-Schnittstelle aufweisenden Steuereinheit, vorgesehen sind. Dadurch kann gezielt ein Programmelement, insbesondere die Firmware eines speziellen UP³I-Schnittstellencontrollers oder ein Steuerprogramm, aktualisiert werden. Andere Geräte und Steuereinheiten werden somit nicht versehentlich durch die übertragenen Programmdaten aktualisiert. Dadurch können Fehlfunktionen und Ausfälle von Geräten und Steuereinheiten vermieden werden. Dazu ist es vorteilhaft, jeder UP³I-Schnittstelle als Unterscheidung zu weiteren über Datenverbindungen mit dieser UP³I-Schnittstelle verbundenen UP³I-Schnittstellen eine Kennung zuzuordnen. Vorzugsweise ist diese Kennung eine Busadresse.

Ein zweiter Aspekt der Erfindung betrifft eine Anordnung zum Aktualisieren von Programmdaten eines Geräts über eine UP³I-Schnittstelle. Diese Anordnung weist dieselben Vorteile auf, wie das Verfahren nach Patentanspruch 1 und kann auf die gleiche Art und Weise weitergebildet werden, wie im Zusammenhang mit Patentanspruch 1 beschrieben, insbesondere durch die Merkmale, die in den auf den Patentanspruch 1 direkt oder indirekt rückbezogenen Patentansprüchen enthalten sind.

Ein weiterer Aspekt der Erfindung betrifft ein Computerprogrammprodukt, durch das ein erfindungsgemäßes Verfahren durchführbar ist.

Die Erfindung kann vorteilhaft bei elektrografischen Druck- oder Kopiergeräten sowie bei Vor- und/oder Nachverarbeitungseinheiten dieser Druck- oder Kopiergeräte eingesetzt werden. Die Aufzeichnungsverfahren zur Bilderzeugung dieser Druck- oder Kopiergeräte beruht insbesondere auf dem elektrofotografischen, magnetografischen oder ionografischen Aufzeichnungsprinzip. Ferner können die Druck- oder Kopiergeräte ein Aufzeichnungsverfahren zur Bilderzeugung nutzen, bei dem ein Bildaufzeichnungsträger direkt oder indirekt elektrisch punktweise angesteuert wird. Die Erfindung ist jedoch nicht auf solche elektrografischen Druck- oder Kopiergeräte beschränkt.

Die Erfindung ist insbesondere dazu geeignet zumindest teilweise mit Hilfe von Programmdaten (Software) realisiert zu werden, die in einer Datei auf einen Datenträger, wie einer Diskette, CD-ROM oder DVD, oder in einer Datei über ein Daten- bzw. Kommunikationsnetz als Programmprodukt für eine Datenverarbeitungsanlage verbreitet werden können. Derartige und vergleichbare Computerprogrammprodukte oder Programmelemente sind Ausgestaltungen der Erfindung. Der erfindungsgemäße Ablauf kann in einem Computer, in einer Steuereinheit, in einem Druckgerät und/oder in einem Drucksystem mit vorgeschalteten oder nachgeschalteten Datenverarbeitungsgeräten durchgeführt werden. Dabei können geeignete Steuer- und/oder Datenverarbeitungseinheiten, die insbesondere als Computer oder Mikrocontroller ausgeführt sind und mit deren Hilfe die Erfindung angewendet wird, weitere an sich bekannte technische Einrichtungen, wie Eingabemittel (Tastatur, Maus, Touchscreen) mindestens einen Microprozessor, mindestens einen Datenund/oder Steuerungsbus, mindestens einer Anzeigeeinrichtung (Monitor, Display) sowie mindestens einen Arbeitsspeicher, einen Festplattenspeicher und/oder eine Netzwerkkarte enthalten.

Zum besseren Verständnis der vorliegenden Erfindung wird im Folgenden auf die in den Zeichnungen dargestellten bevorzugten Ausführungsbeispiele Bezug genommen, die anhand spezifischer Terminologie beschrieben sind. Es sei jedoch darauf hingewiesen, dass der Schutzumfang der Erfindung dadurch nicht eingeschränkt werden soll, da derartige Veränderungen und weitere Modifizierungen an den gezeigten Vorrichtungen und/oder den beschriebenen Verfahren sowie derartige weitere Anwendungen der Erfindung, wie sie darin aufgezeigt sind, als übliches derzeitiges oder künftiges Fachwissen eines zuständigen Fachmanns angesehen werden.

Die Figuren zeigen Ausführungsbeispiele der Erfindung, nämlich:
- Figur 1: eine schematische Darstellung von Komponenten zum Übertragen von Steuerdaten und Firmwaredaten zwischen Komponenten eines Hochleistungsdrucksystems gemäß einer ersten Ausführungsform der Erfindung;
- Figur 2: eine schematische Darstellung von Komponenten zum Übertragen von Steuerdaten und Firmwaredaten zwischen Komponenten eines Hochleistungsdrucksystems gemäß einer zweiten Ausführungsform der Erfindung;
- Figur 3: eine schematische Darstellung von Komponenten zum Übertragen von Steuerdaten und Firmwaredaten zwischen Komponenten eines Hochleistungsdrucksystems gemäß einer dritten Ausführungsform der Erfindung;
- Figur 4: die schematische Darstellung eines Datenbusses mit zwei Verarbeitungseinheiten des Hochleistungsdrucksystems mit jeweils einer UP³I-Schnittstelle, wobei eine der Verarbeitungseinheiten eine weitere Schnittstelle zur Datenverbindung zu einer weiteren Verarbeitungseinheit des Hochleistungsdrucksystems bereitstellt und
- Figur 5: eine schematische Darstellung der Steuerkomponenten einer Vorverarbeitungseinheit und einer Druckeinheit, die über einen UP³I-Bus miteinander verbunden sind.

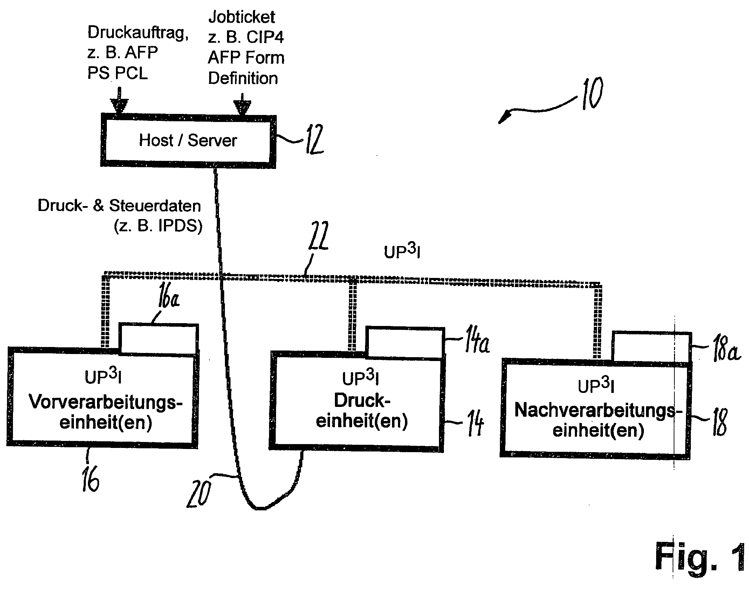

In Figur 1 ist eine schematische Darstellung eines Steuersystems 10 zum Steuern eines Hochleistungsdrucksystems mit einer als Hochleistungsdrucker ausgeführten Druckeinheit 14, einer Vorverarbeitungseinheit 16 und einer Nachverarbeitungseinheit 18 gezeigt. Die Druckeinheit 14, die Vorverarbeitungseinheit 16 und die Nachverarbeitungseinheit 18 haben jeweils eine UP³I-Schnittstelle, die über einen UP³I-Datenbus 22 miteinander verbunden sind. Dieser UP³I-Datenbus 22 basiert auf einer Firewire-Datenverbindung zwischen der Druckeinheit 14, der Vorverarbeitungseinheit 16 und der Nachverarbeitungseinheit 18 nach dem IEEE 1394-Standard. Die Vorverarbeitungseinheit 16 hat ein Bedienfeld 16a, und die Druckeinheit 14 hat ein Bedienfeld 14a, und die Nachverarbeitungseinheit 18 hat ein Bedienfeld 18a. Die Bedienfelder 14, 16a, 18a dienen als Mensch-Maschine-Schnittstelle und ermöglichen Bedieneingaben und/oder Statusausgaben. Vorzugsweise umfassen die Bedienfelder 14a, 16a, 18a eine Anzeigeeinheit zum Bereitstellen jeweils einer grafischen Benutzeroberfläche. Die Druckeinheit 14 und die Verarbeitungseinheiten 16, 18 werden aufgrund ihrer UP³I-Schnittstelle auch als UP³I-Geräte bezeichnet. Eine UP³I-Schnittstelle umfasst vorzugsweise einen UP³I-Schnittstellencontroller, der eine Firmware aufweist. Der UP³I-Schnittstellencontroller kann auch durch eine Steuer- und/oder Datenverarbeitungseinheit des UP³I-Gerätes bereitgestellt werden. Ferner kann eine weitere Steuereinheit des UP³I-Gerätes mit dem UP³I-Schnittstellencontroller verbunden sein, die selbst keine UP³I-Funktionalität aufweist.

Die Druckeinheit 14 ist über eine Datenleitung 20 mit einer Hostdatenverarbeitungsanlage 12 verbunden, die auch als Druckserver dient. Der Hostdatenverarbeitungsanlage 12 wird ein Druckauftrag mit Druckdaten zugeführt. Die Druckdaten werden der Hostdatenverarbeitungsanlage 12 vorzugsweise als Druckdatenstrom, vorzugsweise als AFP-, Postscript- oder PCL-Druckdatenstrom , zugeführt. Ferner können der Hostdatenverarbeitungsanlage 12 dem Druckauftrag zugeordnete Druckauftragsbegleitdaten in Form eines sogenannten Jobtickets gemäß einer Job Definition Language (JDL) vorzugsweise in einem standardisierten Format, wie dem Job Definition Formate (JDF), übertragen werden. Diese Druckauftragsbegleitdaten können insbesondere eine sogenannte AFP Form Definition umfassen. Ein Industriekonsortium hat eine JDF-Spezifikation von Datenformaten im Druckprozess vereinbart, die zum Zeitpunkt der vorliegenden Patentanmeldung der Version 1.3 vom 30. September 2005 über die Internetseite http:\\www.cip4.org zu beziehen ist.

Von der Hostdatenverarbeitungsanlage 12 werden Druck- und Steuerdaten über die Datenleitung 20 zur Druckeinheit 14 übertragen. Diese Druck- und Steuerdaten können beispielsweise in einem bekannten Druckdatenstrom, wie beispielsweise dem IPDS, enthalten sein.

Um Fehler in der Firmware einer Steuereinheit eines UP³I-Gerätes zu beheben oder um die UP³I-Schnittstellenfunktionalität an geänderte Anforderungen anzupassen, müssen Programmdaten einer neuen geänderten Version der Firmware erzeugt und in einem zum Speichern der Firmware vorgesehenen Speicherbereich der Steuereinheit gespeichert werden. Nach einem Neustart der Steuereinheit arbeitet diese dann die Programmdaten der neuen geänderten Version der Firmware ab. Die Firmware umfasst insbesondere Steuerprogramme und/oder weitere von der Steuereinheit abzuarbeitende Programmelemente. Auf die gleiche Weise können zusätzlich oder alternativ andere Programmelemente der Steuereinheit des UP³I-Gerätes aktualisiert werden.

Zum Aktualisieren der Firmware einer Steuereinheit der Vorverarbeitungseinheit 16 über deren UP³-Schnittstelle werden der Druckeinheit 12 aktualisierte Firmwaredaten zugeführt. Die aktualisierten Firmwaredaten können beispielsweise von der Hostdatenverarbeitungsanlage 12 oder von einer weiteren Datenverarbeitungsanlage zur Druckeinheit 14 übertragen werden. Zum Übertragen der Firmwaredaten von der weiteren Datenverarbeitungsanlage zur Druckeinheit 14 kann auch ein nicht dargestelltes lokales Netzwerk genutzt werden, über das die Druckeinheit 14 mit dieser weiteren Datenverarbeitungsanlage verbunden ist. Die Druckeinheit 14 erzeugt nicht-gerätespezifische UP³I-Datenpakete mit Firmwaredaten einer für die Steuereinheit der Vorverarbeitungseinheit 16 geeigneten Firmware und fügt diesen UP³I-Datenpaketen eine Zieladresse der UP³I-Schnittstelle der Vorverarbeitungseinheit 16 hinzu. Die UP³I-Datenpakete, die die Firmwaredaten enthalten, werden als sogenannte Free-Page-Information-Datenpakete gekennzeichnet, wodurch diese UP³I-Datenpakete nicht als UP³I-Steuerdaten interpretiert werden.

Ein Anwendungsprogramm der Steuereinheit der Vorverarbeitungseinheit 16 überschreibt die in der Steuereinheit bereits gespeicherten Firmwaredaten mit dem neuen der UP³I-Schnittstelle der Vorverarbeitungseinheit 16 zugeführten Firmwaredaten und veranlasst einen Neustart dieser Steuereinheit. Durch diesen Neustart liest die Steuereinheit die neuen Firmwaredaten aus dem Speicherbereich aus und lädt diese als Firmware. Die Steuereinheit arbeitet nach dem Neustart die geladenen neuen Firmwaredaten ab. Somit ist eine Aktualisierung der Firmware der Steuereinheit erfolgt.

Das Anwendungsprogramm ist ein geeignetes Ladeprogramm, vorzugsweise ein sogenannter Firmwareloader, der die übertragenen Firmwaredaten in einen für die Firmware vorgesehenen Speicherbereich der Steuereinheit speichert. Der Speicherbereich kann dabei in der Steuereinheit selbst oder in einem mit der Steuereinheit verbundenen Speicher vorgesehen sein. Durch diese Vorgehensweise ist die Firmware der Steuereinheit der Vorverarbeitungseinheit 16 einfach über bestehende Datenverbindungen zur Steuereinheit remote aktualisiert worden. Eine weitere direkte Kontaktierung der Steuereinheit und/oder der UP³I-Schnittstelle ist dazu nicht erforderlich. Somit kann bei der remote Aktualisierung das Aktualisieren der Firmware bzw. eines anderen Programmelements von der Ferne aus durchgeführt werden, ohne dass ein Bedieneingriff vor Ort am Gerät bzw. der Steuereinheit des Gerätes erforderlich ist. Auf die gleiche Weise kann auch die Firmware oder ein anderes Programmelement einer Steuereinheit eines anderen mit dem Datenbus 22 verbundenen UP³I-Gerätes aktualisiert werden, insbesondere eine Steuereinheit der Druckeinheit 14 selbst oder eine Steuereinheit der Nachverarbeitungseinheit 18. Die Steuereinheit ist insbesondere ein UP³I-Schnittstellencontroller, der neben der UP³I-Funktionalität weitere Steueraufgaben haben kann.

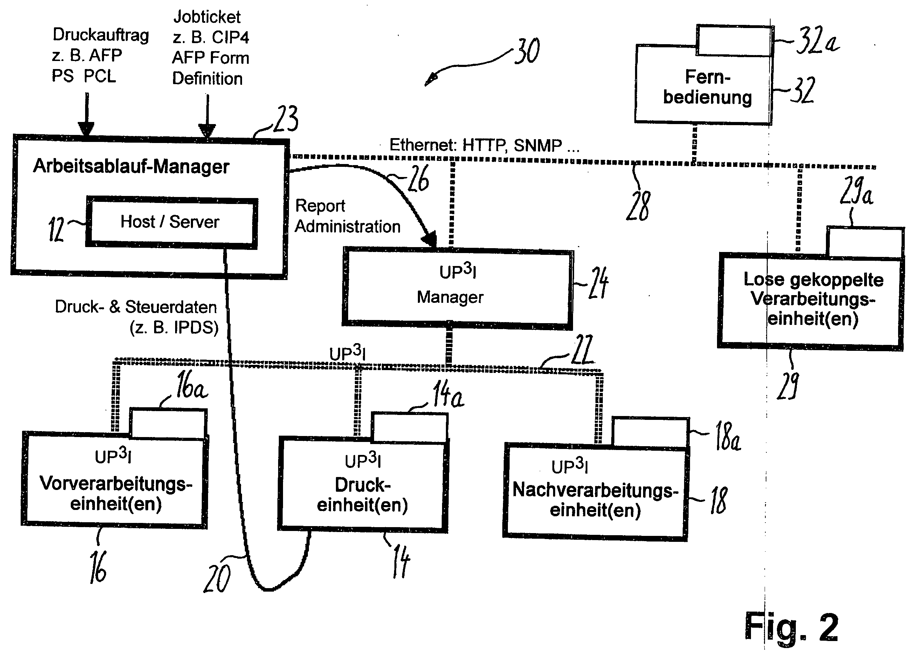

In Figur 2 ist eine schematische Darstellung eines Steuersystems 30 zum Steuern von Komponenten eines Hochleistungsdrucksystems gemäß einer zweiten Ausführungsform der Erfindung gezeigt. Das Steuersystem 30 umfasst die Komponenten 12 bis 22 des Steuersystems 10 nach Figur 1. Diese Komponenten haben bei der Ausführungsform nach Figur 2 die gleichen Bezugszeichen und die gleiche Funktion. Bei dem Steuersystem 30 nach Figur 2 ist die Hostdatenverarbeitungsanlage 12 in einen Workflowmanager 23 integriert, der den Arbeitsablauf des Hochleistungsdrucksystems steuert und Druckaufträge in einem Druckzentrum oder zwischen mehreren regional verteilt angeordneten Drucksystemen koordiniert.

Der Workflowmanager 23 ist über eine lokales Netzwerk 28 mit einer UP³I-Verwaltungseinheit 24, einer Remote-Bedieneinheit 32 und weiteren Verarbeitungseinheiten verbunden, von denen eine mit dem Bezugszeichen 29 bezeichnet ist. Eine solche weitere Verarbeitungseinheit 29 kann z.B. ein Archivsystem, eine Frankier- und/oder Kuvertiereinheit sein. Die weitere Verarbeitungseinheit 29 hat ein Bedienfeld 29a und die Remote-Bedieneinheit 32 hat ein Bedienfeld 32a. Die UP³I-Verwaltungseinheit 24 ist über den UP³I-Datenbus 22 mit der Druckeinheit 14, der Vorverarbeitungseinheit 16 und der Nachverarbeitungseinheit 18 verbunden. Die UP³I-Verwaltungseinheit 24 dient als Schnittstelle zwischen dem lokalen Netzwerk 28 und dem UP³I-Datenbus 22. Die UP³I-Verwaltungseinheit 24 setzt UP³I-Steuerinformationen in SNMP-, HTTP- und/oder andere geeignete Daten um und überträgt diese zum lokalen Netzwerk 28. Ferner setzt die UP³I-Verwaltungseinheit 24 HTTP- und/oder SNMP-Steuerinformationen sowie andere Steuerinformationen des lokalen Netzwerks 28 in UP³I-Steuerinformationen um. Diese UP³I-Steuerinformationen werden der Druckeinheit 14, der Vorverarbeitungseinheit 16 und der Nachverarbeitungseinheit 18 zur Verfügung gestellt.

Mit Hilfe des Workflowmanagers 23 kann über die UP³I-Verwaltungseinheit 24 eine Verwaltung und eine Berichterstattung über Steueraufgaben und Steuerfunktionen in dem Workflowmanager 23 und der UP³I-Verwaltungseinheit 24 sowie den UP³I-Schnittstellen der Druckeinheit 14, der Vorverarbeitungseinheit 16 und der Nachverarbeitungseinheit 18 erfolgen.

Zur Aktualisierung der Firmware der Steuereinheit der Vorverarbeitungseinheit 16 über deren UP³I-Schnittstelle werden entsprechend aktualisierte Firmwaredaten vom Workflowmanager 23 zur UP³I-Verwaltungseinheit 24 übertragen.

Die UP³I-Verwaltungseinheit 24 erzeugt UP³I-Datenpakete mit den Firmwaredaten und fügt diesen UP³I-Datenpaketen als Zieladresse die Geräteadresse der UP³I-Schnittstelle der Vorverarbeitungseinheit 16 hinzu. Die UP³I-Datenpakete, die die Firmwaredaten enthalten, werden als sogenannte Free-Page-Information-Datenpakete oder als ein anderes nicht-gerätespezifisches UP³I-Datenpaket zur Vorverarbeitungseinheit 16 übertragen, wodurch diese Datenpakete nicht als UP³I-Steuerdaten interpretiert werden. Ein Anwendungsprogramm, ein sogenannter Firmwareloader, überschreibt die in der Steuereinheit bereits gespeicherten Firmwaredaten mit den neuen zur UP³I-Schnittstelle der Vorverarbeitungseinheit 16 übertragenen Firmwaredaten und veranlasst einen Neustart der Steuereinheit der Vorverarbeitungseinheit 16, so dass die Steuereinheit der Vorverarbeitungseinheit 16 die neuen Firmwaredaten aus dem Speicherbereich ausliest und als Firmware lädt und abarbeitet. Dadurch ist auf einfache Art und Weise die Firmware des Controllers der UP³I-Schnittstelle der Vorverarbeitungseinheit 16 aktualisiert worden.

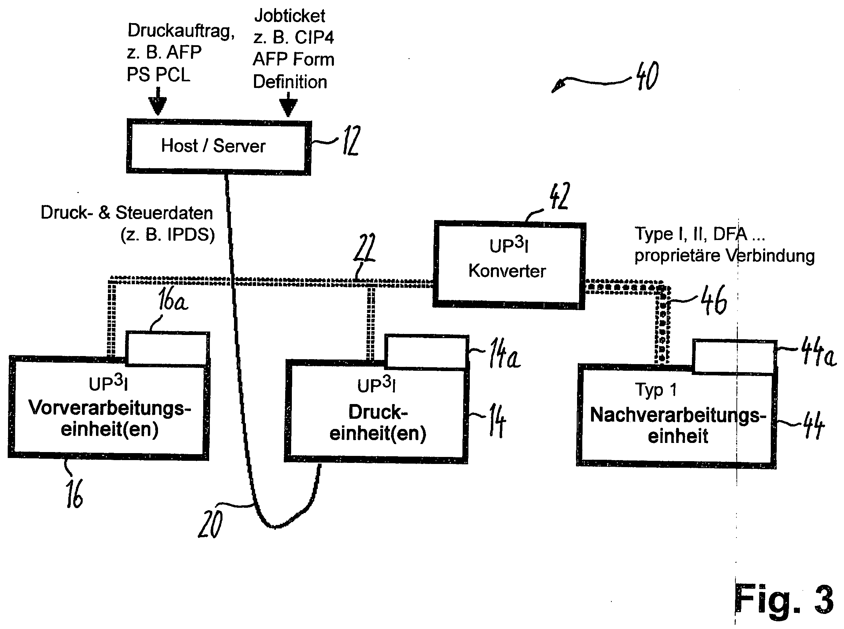

In Figur 3 ist ein Steuersystem 40 zum Steuern eines Hochleistungsdrucksystems ähnlich dem Steuersystem 10 nach Figur 1 schematisch dargestellt. Elemente mit gleicher Funktion oder gleichem Aufbau haben dieselben Bezugszeichen. In Figur 3 ist eine Nachverarbeitungseinheit 44 gezeigt, die im Unterschied zur Nachverarbeitungseinheit 18 nach Figur 1 keine UP³I-Schnittstelle sondern eine sogenannte "Typ1"-Steuerschnittstelle hat. Die Nachverarbeitungseinheit 44 weist ein Bedienfeld 44a auf.

Alternativ zu dieser "Typ1"-Steuerschnittstelle kann auch eine zusätzliche oder alternative Nachverarbeitungseinheit mit einer "Typ2"-Steuerschnittstelle oder mit einer proprietären Steuerschnittstelle vorgesehen sein. Zum Umsetzen der UP³I-Steuerdaten, die Steuerinformationen zum Steuern der Nachverarbeitungseinheit 44 umfassen, ist eine UP³I-Adapterbox 42 vorgesehen. Diese Adapterbox 42 setzt die UP³I-Steuerinformationen, die zum Steuern der Nachverarbeitungseinheit 44 vorgesehen sind, in Steuersignale gemäß der "Typ1"-Steuerschnittstelle um und führt diese Steuersignale der "Typ1"-Steuerschnittstelle der Nachverarbeitungseinheit 44 über eine Signalleitung 46 zu. Mit Hilfe einer solchen oder einer ähnlichen UP³I-Adapterbox können somit nahezu beliebige andere Nachverarbeitungseinheiten, Vorverarbeitungseinheiten und Druckeinheiten mit dem UP³I-Datenbus 22 verbunden werden, die selbst keine UP³I-Datenschnittstelle aufweisen. In gleicher Weise, wie im Zusammenhang mit Figur 1 beschrieben, kann die Firmware einer Steuereinheit der UP³I-Adapterbox 42 aktualisiert werden. Die Aktualisierungsdaten zum Aktualisieren der Firmware werden insbesondere über die Hostdatenverarbeitungsanlage 12 der Druckeinheit 14 zugeführt.

Die Druckeinheit 14 erzeugt mit Hilfe dieser zugeführten Firmwaredaten UP³I-Free-Page-Information-Datenpakete und führt diese dem UP³I-Datenbus 22 zu. Diese UP³I-Datenpakete werden über den UP³I-Datenbus 22 zur UP³I-Schnittstelle der UP³I-Adapterbox 42 übertragen. Die UP³I-Schnittstelle der UP³I-Adapterbox 42 führt die Firmwaredaten der UP³I-Datenpakete einem Firmwareloader-Anwendungsprogramm zu, das mit Hilfe der zugeführten Firmwaredaten die in der UP³I-Adapterbox 42 bereits vorhandenen Firmwaredaten ersetzt und die Steuereinheit der UP³I-Adapterbox 42 neu startet, so dass die neuen Firmwaredaten als Firmware durch die Steuereinheit geladen und abgearbeitet werden. Durch diesen Vorgang ist die Firmware der Steuereinheit der UP³I-Adapterbox 42 aktualisiert worden.

Die "Typ1"-Steuerschnittstelle der Nachbearbeitungseinheit 44,"Typ2"-Steuerschnittstellen oder proprietäre Steuerschnittstellen, wie z. B. eine DFA-Schnittstelle, sind in der Einleitung der bereits erwähnten UP³I-Spezifikation, Version 1.20, Kapitel 1.3.1, genannt. Mit Hilfe dieser Steuerschnittstellen können grundlegende Steuer- und Statusinformationen zwischen den Druckgeräten und Vor- sowie Nachverarbeitungsgeräten, die z.B. einen Papiertransportstopp betreffen, ausgetauscht werden. Die "Typ1"-Steuerschnittstelle umfasst eine geringere Anzahl an Steuer- und Statusinformationen als die "Typ2"-Steuerschnittstelle. Die "Typ1"-Steuerschnittstelle und die "Typ2"-Steuerschnittstelle werden herstellerübergreifend verwendet, wohingegen proprietäre Steuerschnittstellen nur für Geräte eines Herstellers vorgesehen sind. Mit Hilfe dieser genannten Steuerschnittstellen werden Hardware-Steuersignale direkt zwischen zwei Geräten ausgetauscht.

Mit Hilfe der UP³I-Datenschnittstelle ist dagegen eine komplexe Kommunikation zwischen den Verarbeitungs-, Steuer- und Druckeinheiten des Hochleistungsdrucksystems quasi in Echtzeit möglich, so dass mit Hilfe dieser Kommunikation über die UP³I-Datenschnittstelle komplexe Steuerfunktionen bis hin zur Remote Operating Control von Verarbeitungs- und Druckeinheiten realisiert werden können. Ferner können UP³I-Steuerungsinformationen, d.h. UP³I-Steuerdaten, in Druckdatenströme, wie z.B. IPDS, eingebunden werden, wie dies im Zusammenhang mit Figur 1 bereits erwähnt und im Kapitel 1.3.3 sowie in Kapitel 3 der genannten UP³I-Spezifikation ausgeführt ist. Die UP³I-Daten können dann indirekt oder direkt zur Steuerung der Verarbeitungseinheiten 16, 18 sowie von Druckeinheiten 14 genutzt werden.

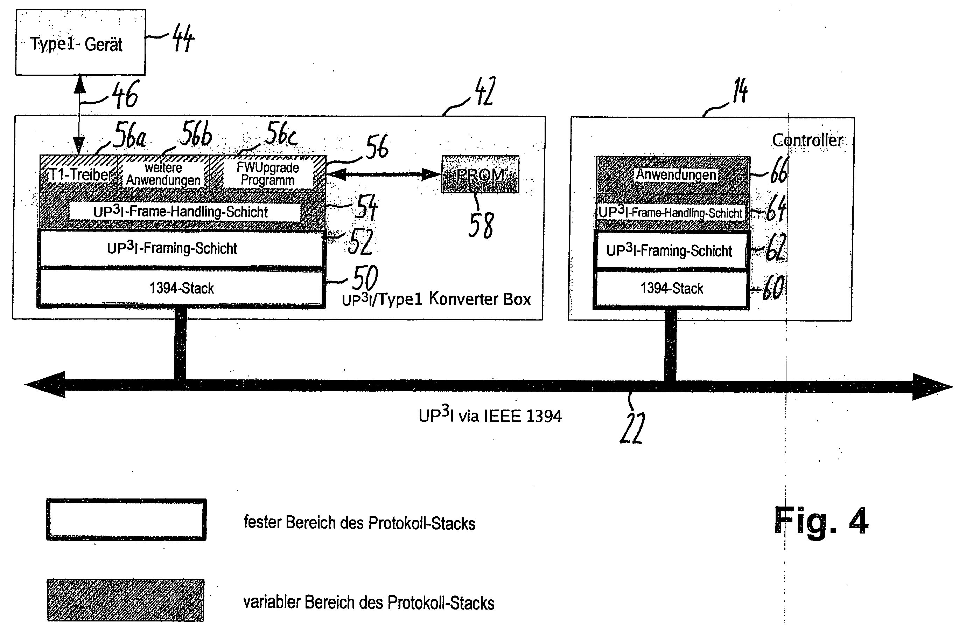

In Figur 4 ist das Übertragen von UP³I-Daten über den Datenbus 22 zwischen mindestens zwei UP³I-Geräten mit jeweils einer UP³I-Schnittstelle schematisch dargestellt. Die Übertragung der UP³I-Daten über den Datenbus 22 erfolgt gemäß dem Standard IEEE 1394. Zur Vereinfachung sind das erste UP³I-Gerät in Figur 4 der Druckeinheit 14 zugeordnet und in Figur 4 mit dem Bezugszeichen 14 bezeichnet. Ferner ist das zweite UP³I-Gerät der UP³I-Adapterbox 42 zugeordnet und in Figur 4 mit dem Bezugszeichen 42 bezeichnet. Zu den UP³I-Schnittstellen der UP³I-Geräte 14 und 42 werden UP³I-Daten über den Datenbus 22 übertragen. Mit Hilfe der Adapterbox 42 sind Geräte mit einer "Typ1"-Steuerschnittstelle einer "Typ2"-Steuerschnittstelle und/oder anderer bekannter Steuerschnittstellen mit dem UP³I-Datenbus 22 verbindbar.

Das UP³I-Gerät 42 hat eine erste untere Schicht, die als Übertragungsschicht 50 zum Übertragen von Daten über den Datenbus 22 dient. Diese Übertragungsschicht wird durch die Firewire-Schnittstelle gemäß dem IEEE 1394 Standard gebildet. Diese Übertragungsschicht 50 weist einen dem IEEE 1394 Standard entsprechenden Protokollstack auf. Auf diese Übertragungsschicht 50 aufbauend ist eine zweite höhere Verarbeitungsschicht 52 vorgesehen, die als UP³I-Framing-Schicht 52 bezeichnet wird. Diese UP³I-Framing-Schicht 52 ermittelt die in den im Protokollstack der Übertragungsschicht 50 gespeicherten Daten enthaltenen UP³I-Datenpakete und entfernt die zur Datenübertragung gemäß dem IEEE 1394 Standard erforderlichen weiteren Daten und Informationen. Ferner überprüft die UP³I-Framing-Schicht 52, ob das jeweilige ermittelte Datenpaket an das UP³I-Gerät 42 bzw. an dessen UP³I-Schnittstelle adressiert ist.

Wird für mindestens ein Datenpaket festgestellt, dass dieses Datenpaket an das UP³I-Gerät 42 adressiert ist, werden diese UP³I-Datenpakete einer höheren dritten Verarbeitungsschicht, der UP³I-Frame-Handling-Schicht 54, zugeführt. Diese UP³I-Frame-Handling-Schicht 54 verarbeitet die UP³I-Datenpakete und zerlegt die UP³I-Datenpakete in sogenannte Triplets gemäß dem UP³I-Standard. Weiterhin überprüft die UP³I-Frame-Handling-Schicht 54, ob aufgrund der ermittelten Datenpakete UP³I-Daten, insbesondere über die erfolgreiche Übertragung dieser Datenpakete, als Informationen zum Datenbus 22 zu übertragen sind.

Ferner ist eine vierte höhere Verarbeitungsschicht 56 vorgesehen, die mehrere Anwendungen 56a, 56b und 56c umfasst. Die Verarbeitungsschicht 56 wird auch als Anwendungsschicht bezeichnet. Abhängig von den in dem UP³I-Datenpaket enthaltenen Informationen wird für jedes Triplet ein Anwendungsprogramm 56a bis 56c ermittelt, dem dann die den Triplets zugeordneten Daten zur Weiterverarbeitung zugeführt werden oder es wird unmittelbar eine Reaktion auf dem UP³I-Bus 22 ausgelöst, indem dem UP³I-Bus 22 entsprechende UP³I-Daten zugeführt werden. Eine solche Reaktion erfolgt beispielsweise bei einem Echo- oder Pingvorgang.

Als Anwendungsprogramm ist im vorliegenden Ausführungsbeispiel ein T1-Treiber-Anwendungsprogramm als Softwaretreiber zum Umsetzen von UP³I-Steuerdaten in "Typ1"-Steuersignale sowie von "Typ1"-Steuersignale auf UP³I-Steuerdaten vorgesehen. Ferner sind weitere Anwendungsprogramme 56b, wie z.B. sogenannte Log-Programme und Debugging-Programme vorgesehen, denen Daten der diesen Anwendungsprogrammen 56b zugeordneten Triplets zugeführt werden. Anwendungsprogramme können auch als Programmroutinen, Unterprogramme, Funktionen oder als andere bekannte Programmelemente ausgeführt sein.

Ermittelt die UP³I-Frame-Handling-Schicht 54, dass insbesondere in den Free-Page-Information-Datenpaketen Firmwaredaten enthalten sind, werden diese Firmwaredaten zu dem Firmwareupgrade-Programm 56c übertragen. Das Firmwareupgrade-Programm 56c hat insbesondere einen Firmwareloader zum Speichern der Firmwaredaten in einem PROM-Speicherbereich 58 des UP³I-Geräts 42 oder in einem mit dem UP³I-Gerät 42 verbundenen externen Speicher. Dabei überschreibt das Firmwareupgrade-Anwendungsprogramm 56c bereits im PROM-Speicherbereich 58 gespeicherte Firmwaredaten einer dort gespeicherten Firmwareversion oder alternativ einen freien Speicherbereich. Dabei können auch im Speicherbereich 58 gespeicherte Firmwaredaten einer aktuelleren Firmwareversion mit Firmwaredaten einer älteren Firmwareversion überschrieben werden, insbesondere dann, wenn die neuere Version gegenüber der älteren Version Fehler aufweist.

Auch ein solches Aktualisieren der Firmware im Speicherbereich 58 durch Überschreiben von Programmdaten einer neueren Firmwareversion mit Programmdaten einer älteren Firmwareversion wird als Aktualisieren und als Upgrade im Sinne der Erfindung bezeichnet. Die Firmware kann auch Anwendungsprogramme, insbesondere Steuerprogramme, umfassen.

Auf diese Weise ist eine einfache Aktualisierung der Firmware eines Gerätes möglich, wenn nach dem Speichern der zum UP³I-Gerät 42 übertragenen Firmwaredaten im Speicherbereich 58 des UP³I-Geräts 42 neu gestartet wird. Nach dem Neustart lädt das UP³I-Gerät 42 die im PROM-Speicherbereich 58 gespeicherten Firmwaredaten und verarbeitet diese entsprechend. Dadurch erhält der UP³I-Schnittstellencontroller 42 eine den übertragenen Firmwaredaten entsprechende Firmware.

Das UP³I-Gerät der Druckeinheit 14 hat den gleichen mehrere Übertragungsschichten aufweisenden Schichtaufbau wie die als das UP³I-Gerät ausgeführte UP³I-Adapterbox 42. Einer ersten Übertragungsschicht 60 ist eine UP³I-Framing-Verarbeitungsschicht 62, übergeordnet, die die empfangenen Daten in gleicher Weise verarbeitet, wie im Zusammenhang mit der UP³I-Framing-Verarbeitungsschicht 52 bereits erläutert worden ist. Ferner hat das UP³I-Gerät 14 eine UP³I-Frame-Handling-Verarbeitungsschicht 64 sowie eine weitere übergeordnete Verarbeitungsschicht 66, die mindestens ein Anwendungsprogramm umfasst. Die Übertragungsschichten 50, 60 sowie die unmittelbar über diesen Übertragungsschichten 50, 60 jeweils angeordneten ersten UP³I-Framing-Verarbeitungsschichten 52, 62 bilden Grundschichten der jeweiligen UP³I-Schnittstelle. Während die Übertragungs- bzw. Verarbeitungsschichten 50, 60, 52, 62, 54, 64 im Wesentlichen durch die UP³I-Spezifikation bzw. IEEE 1394-Spezifikation fest vorgegeben sind, sind die ihnen übergeordneten Schichten 56 bzw. 66 variable und durch den Anwender gestaltbare Verarbeitungsschichten.

Beim Firmwareupgrade mit Hilfe des Firmwareupgradeprogramms 56c kann das Problem auftreten, dass die gesamte Firmware im PROM-Speicherbereich 58 gelöscht und durch die neue zum UP³I-Gerät 42 übertragene Firmwaredaten ersetzt wird. Dadurch werden möglicherweise auch fehlerfrei funktionierende und nicht zu aktualisierende Teile der Firmware mit infolge einer fehlerhaften Datenübertragung der Firmwaredaten möglicherweise korrupten Firmwaredaten überschrieben, wodurch dann nach einem Neustart das UP³I-Gerät 42 keine geeigneten Firmwaredaten zur Verfügung hat. Dadurch kann möglicherweise kein erneutes Aktualisieren der Firmwaredaten erfolgen, da die dafür erforderlichen Schichten 50 bis 56 der UP³I-Schnittstelle ohne funktionierende Firmware nicht durch das UP³I-Gerät bereitgestellt werden können.

Um dieses Problem zu lösen, kann vorgesehen werden, in dem zu aktualisierenden UP³I-Gerät einen zweiten Speicherbereich vorzusehen, in den die Aktualisierungsdaten komplett eingespielt werden und gegebenenfalls geprüft werden, ob sie vollständig und korrekt übertragen worden sind, bevor die Aktualisierung der bisherigen Daten erfolgt. Alternativ kann vorgesehen sein, nur Teile der bereits im Speicherbereich 58 gespeicherten Firmwaredaten zu aktualisieren, insbesondere die Teile, durch die sich die übertragenen Firmwaredaten von den im PROM-Speicherbereich 58 gespeicherten Firmwaredaten unterscheiden.

Alternativ oder zusätzlich kann zumindest der Teil zum Bereitstellen der Funktionalität zum Aktualisieren der Firmware bei einer Aktualisierung der im PROM-Speicherbereich 58 gespeicherten Firmware erhalten bleiben, wodurch eine Aktualisierungsmöglichkeit der Firmware sicher erhalten bleibt. Dazu wird der PROM-Speicher 58 vorzugsweise segmentiert und nur das Speichersegment mit den aktuellen Firmwaredaten überschrieben, das nicht Firmwaredaten zum Bereitstellen der beschriebenen Grundfunktionalität zum Laden der Firmware enthält. Eine solche Segmentierung des PROM-Speichers wird von einer Vielzahl bekannter PROM-Speicherbausteine unterstützt. Solche PROM-Speicherbausteine sind insbesondere EEPROMs. PROM-Speicher können auch als Flash-Speicher ausgeführt sein.

Die UP³I-Schnittstelle setzt auf dem Basisprotokoll des Firewire-Standards gemäß IEEE 1394a / IEEE 1394b auf. Durch die beschriebene Vorgehensweise, insbesondere durch die vorgesehenen Verarbeitungsschichten 50 bis 56; 60 bis 66 wird sichergestellt, dass die als Free-Page-Information-Datenpakete gekennzeichneten Aktualisierungsdaten nicht als UP³I-Steuerdaten fehlinterpretiert und zu einer Fehlfunktion oder zu einem Absturz des UP³I-Geräts 42, 14 führt. Fehlfunktionen werden dadurch ausgeschlossen.

Die Firmwaredaten werden durch das UP³I-Protokoll hindurch mit Hilfe dieser Free-Page-Information-Datenpakete getunnelt zum jeweiligen UP³I-Gerät 42, 14 bzw. zur jeweiligen UP³I-Schnittstelle übertragen, dessen Firmware aktualisiert werden soll. Das Firmwareupgradeprogramm 56c verarbeitet die übertragenen Firmwaredaten weiter. Ist ein solches Firmwareupdateprogramm 56c nicht vorhanden, werden die übertragenen Firmwaredaten nicht weiterverarbeitet, da die weiteren Anwendungsprogramme 56a, 56b bzw. die Anwendungsprogramme 66 diese Firmwaredaten nicht interpretieren können. Die Frame-Handling-Schicht 54 filtert dabei die Firmwaredaten aus, da sie keine passende Applikation für diese Daten findet. Das Bewerten bzw. Auswerten der Datenpakete, die die Firmwaredaten enthalten, erfolgt nicht auf der untersten Protokollebene 50, 60, sondern auf einer höheren Protokollebene, insbesondere in der UP³I-Frame-Handling-Verarbeitungsschicht 54. Durch die Kennzeichnung der UP³I-Datenpakete, die die aktualisierten Firmwaredaten enthalten, als Free-Page-Information-Datenpakete, werden diese Daten als private Information und somit nicht als Steuerinformation übertragen. Dadurch können die übertragenen Firmwaredaten auch andere UP³I-Schnittstellen sowie die über diese Schnittstellen verbundenen Steuereinheiten nicht beeinflussen. Auf diese Art und Weise können bei der Aktualisierung der Firmware auch aktualisierte Treiberprogramme 56a sowie aktualisierte weitere Anwendungsprogramme 56b und/oder Programmelemente zum UP³I-Gerät 42 übertragen und in diesem Gerät 42 implementiert werden. Durch diese beschriebene Vorgehensweise kann eine einfache Softwarewartung, d.h. eine Softwareaktualisierung, erfolgen. Dies ist insbesondere wichtig, da in Zukunft weitere Änderungen des UP³I-Datenschnittstellen-Standards zu erwarten sind.

Alternativ können einzelne Anwendungsprogramme und/oder Programmelemente in gleicher Weise, wie für die Firmware beschrieben, ohne Aktualisierung der Firmware aktualisiert werden. Die für die Firmware beschriebenen Handhabungsmöglichkeiten und Ausgestaltungen können für diese Anwendungsprogramme und Programmelemente in gleicher Weise verwendet werden.

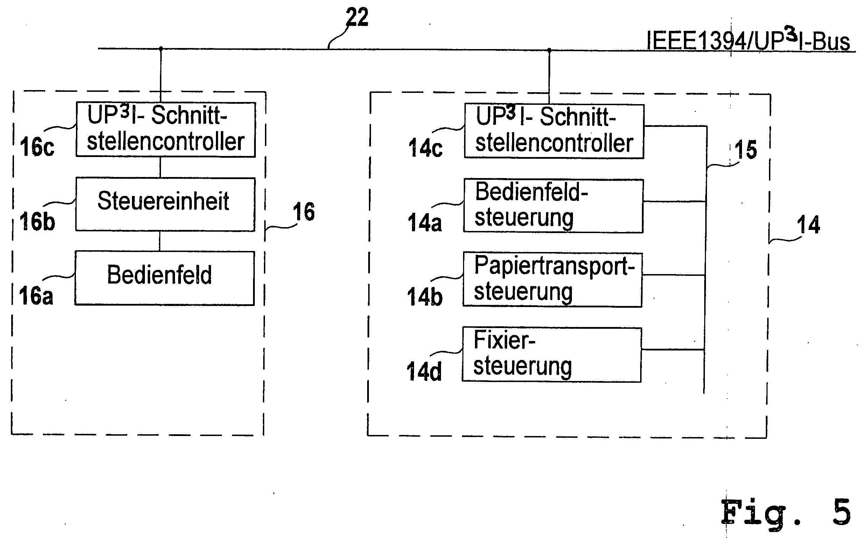

In Figur 5 sind die Vorverarbeitungseinheit 16 und die Druckeinheit 14 mit ihren für die Datenübertragung über den UP³I-Bus 22 und für die Steuerung der jeweiligen Vorverarbeitungseinheit 16, 14 relevanten Komponenten dargestellt. Die Druckeinheit 14 hat einen UP³I-Schnittstellencontroller 14c, eine Bedienfeldsteuerung 14a, eine Papiertransportsteuerung 14b und eine Fixiersteuerung 14d, die über einen internen Bus 15 miteinander verbunden sind. Die Steuerungen 14a, 14b und 14d sind eigenständige Aggregatsteuerungsbausteine, die über den internen Bus 15 mit dem UP³I-Schnittstellencontroller 14c verbunden sind. Dadurch sind die Steuerungen 14a, 14b und 14d über eine UP³I-Schnittstelle, die durch den UP³I-Schnittstellencontroller 14c bereitgestellt wird, mit dem UP³I-Bus 22 verbunden.

Die Vorverarbeitungseinheit 16 ist vorzugsweise eine Abrolleinheit zum Abrollen eines bahnförmigen Trägermaterials, das der Druckeinheit 14 zum Bedrucken zugeführt wird. Dieses bahnförmige Trägermaterial muss der Druckeinheit 14 den Erfordernissen des Druckprozesses angepasst zugeführt werden, der zum Bedrucken des Trägermaterials von der Druckeinheit 14 durchgeführt wird.

Die Abrolleinheit 16 hat einen UP³I-Schnittstellencontroller 16c, eine Steuereinheit 16b und ein Bedienfeld 16a, die über geeignete Datenleitungen oder alternativ über ein Bussystem zum Austausch von Daten und Steuerinformationen miteinander verbunden sind. Der UP³I-Schnittstellencontroller 16c und der UP³I-Schnittstellencontroller 14c sind über den UP³I-Bus 22 miteinander verbunden. Dadurch können zwischen den UP³I-Schnittstellencontrollern 14c, 16c und/oder von und zu weiteren UP³I-Schnittstellen UP³I-Steuerdaten sowie erfindungsgemäß Aktualisierungsdaten übertragen werden. Werden beispielsweise Aktualisierungsdaten über den UP³I-Bus 22 übertragen, die zum Aktualisieren von Programmdaten der Steuereinheit 16b der Abrolleinheit 16 geeignet und/oder vorgesehen sind, werden diese der Steuereinheit 16b über den UP³I-Schnittstellencontroller 16c zugeführt. Weist der UP³I-Schnittstellencontroller 16c eigene Programmdaten, insbesondere Firmwaredaten, zum Bereitstellen der UP³I-Schnittstellenfunktionalität auf, können alternativ oder zusätzlich auch Aktualisierungsdaten zum Aktualisieren der Programmdaten des UP³I-Schnittstellencontrollers 16c über den UP³I-Bus 22 übertragen werden. In gleicher Weise können Aktualisierungsdaten zum Bedienfeld 16a zum UP³I-Schnittstellencontroller 16c, zur Bedienfeldsteuerung 14a, zur Papiertransportsteuerung 14b und/oder zur Fixiersteuerung 14d übertragen werden.

Alternativ oder zusätzlich können dem UP³I-Schnittstellencontroller 14c die Aktualisierungsdaten zum Aktualisieren der Programmdaten des UP³I-Schnittstellencontrollers 16c und/oder der Steuereinheit 16b auch über den internen Bus 15 der Druckeinheit 14 zugeführt werden, wodurch diese dann über den UP³I-Bus 22 zum UP³I-Schnittstellencontroller 16c übertragen werden. Haben mehrere mit dem UP³I-Bus 22 verbundene UP³I-Schnittstellencontroller oder mehrere über einen UP³I-Schnittstellencontroller mit dem UP³I-Bus 22 verbundene Steuereinheiten gleiche Programmdaten, so ist es möglich, die erforderlichen Aktualisierungsdaten nur einmal über den UP³I-Bus 22 zu übertragen. In jeder Verarbeitungseinheit mit einer UP³I-Schnittstelle bzw. in jedem UP³I-Gerät 14, 16 erfolgt eine Selektion derjenigen über den UP³I-Bus 22 übertragenen Aktualisierungsdaten, die zum Aktualisieren von Programmdaten von Komponenten des jeweiligen UP³I-Geräts 14, 16 geeignet und/oder bestimmt sind.

Bei einer Weiterbildung der Erfindung kann das Ersetzen der Programmdaten des Gerätes auch sukzessiv erfolgen, wobei, insbesondere wenn die Aktualisierungsdaten ein Datenvolumen haben, das größer als der zum Zwischenspeichern der Aktualisierungsdaten im Gerät verfügbaren Speicherplatz ist, in einem ersten Übertragungszyklus ein erster Teil der Aktualisierungsdaten und in mindestens einem zweiten Übertragungszyklus ein weiter Teil der Aktualisierungsdaten übertragen werden. Abhängig vom Datenvolumen der Aktualisierungsdaten und von dem zum Zwischenspeichern der Aktualisierungsdaten im Gerät verfügbaren Speicherplatz wird mindestens ein weiterer Übertragungszyklus vorgesehen, um die gesamten Aktualisierungsdaten zum Gerät zu übertragen. Das Datenvolumen der mit jedem Übertragungszyklus übertragenen Aktualisierungsdaten ist dabei jeweils kleiner als der oder gleich dem jeweils zum Zwischenspeichern der Aktualisierungsdaten im Gerät verfügbaren Speicherplatz. Nach jedem Übertragen eines Teils der Aktualisierungsdaten während eines Übertragungszyklus erfolgt mit Hilfe der in diesem Zyklus übertragenen Aktualisierungsdaten eine Aktualisierung eines Teils der Programmdaten. Dabei können sämtliche oder nur ein Teil der im jeweiligen Übertragungszyklus übertragenen Aktualisierungsdaten zur Aktualisierung der Programmdaten vor jedem weiteren Übertragungszyklus genutzt werden. Wird nur ein Teil der in einem Übertragungszyklus übertragenen Aktualisierungsdaten zum Aktualisieren bzw. Ersetzen und/oder Ändern eines Teils der Programmdaten genutzt, wird vorzugsweise der verbleibende Teil mit in einem weiteren Übertragungszyklus übertragenen Aktualisierungsdaten zum Aktualisieren bzw. Ersetzen oder Ändern eines weiteren Teils der Programmdaten genutzt.

Dieses sukzessive Aktualisieren der Programmdaten wird vom Ladeprogramm vorzugsweise automatisch ausgeführt, ohne dass Benutzereingriffe am Gerät erforderlich sind. Vorteilhaft ist, es wenn das Ladeprogramm den zum Zwischenspeichern der Aktualisierungsdaten im Gerät verfügbaren Speicherplatz an die die Aktualisierungsdaten bereitstellende Einheit übermittelt, die dann die Aktualisierungsdaten in mehrere Teile jeweils kleiner gleich dem übermittelten verfügbaren Speicherplatz aufteilt. Alternativ kann das Ladeprogramm vor jedem Übertragungszyklus den für diesen Übertragungszyklus verfügbaren Speicherplatz an die Einheit übermitteln. Vorzugsweise ermittelt das Ladeprogramm auch den zum Zwischenspeichern der Aktualisierungsdaten im Gerät verfügbaren Speicherplatz vor dem Übermitteln des verfügbaren Speicherplatzes an die Einheit.

Die Erfindung lässt sich für beliebige UP³I-Geräte zur Aktualisierung deren Firmware und/oder weiterer Software dieser UP³I-Geräte nutzen und ist nicht auf das UP³I-Gerät einer Adapterbox 42 zum Umsetzen von UP³I-Steuerdaten auf Typ 1-Steuerdaten beschränkt. UP³I-Geräte im Sinne der Erfindung sind beispielsweise Steuereinheiten, die selbst eine UP³I-Schnittstelle aufweisen, und Steuereinheiten, die mit einer UP³I-Schnittstelle verbunden sind, so dass der Steuereinheit Aktualisierungsdaten über die UP³I-Schnittstelle zuführbar sind. Diese Daten können dann in der beschriebenen Weise Programmdaten, insbesondere Firmwaredaten, umfassen.

Obgleich in den Zeichnungen und in der vorhergehenden Beschreibung bevorzugte Ausführungsbeispiele aufgezeigt und detailliert beschrieben worden sind, sollte dies als rein beispielhaft und die Erfindung nicht einschränkend angesehen werden. Es sei darauf hingewiesen, das nur die bevorzugten Ausführungsbeispiele dargestellt und beschreiben sind und sämtliche Veränderungen und Modifizierungen, die derzeit und künftig im Schutzumfang der Erfindung liegen, geschützt werden sollen.

### Bezugszeichenliste

- 10, 30, 40: Steuersystem
- 12: Hostdatenverarbeitungsanlage
- 14: Druckeinheit
- 14a: Bedienfeld/Bedienfeldsteuerung
- 14b: Papiertransportsteuerung
- 14c: Schnittstellencontroller
- 14d: Fixiersteuerung
- 15: interner Datenbus
- 16: Vorverarbeitungseinheit
- 16a: Bedienfeld
- 16b: Steuereinheit
- 16c: Schnittstellencontroller
- 18: Nachverarbeitungseinheit
- 18a: Bedienfeld
- 20: Datenleitung
- 22: Datenbus
- 24: UP³I-Verwaltungseinheit
- 26: Verwaltungs- und Berichterstattungsinformationen
- 28: lokales Netzwerk
- 29a: Bedieneinheit
- 32: Fernbedieneinheit
- 32a: Bedienfeld
- 29: lose gekoppelte Verarbeitungseinheit
- 29a: Bedienfeld
- 23: Workflowmanager
- 42: UP³I-Adapterbox
- 44: Nachverarbeitungseinheit
- 44a: Bedienfeld
- 46: Datenleitung
- 50, 60: Übertragungsschicht
- 52, 62: UP³I-Framing-Verarbeitungsschicht
- 54, 64: UP³I-Frame-Handling-Verarbeitungsschicht

- 56, 66: Anwendungsschicht
- 56a: Typ 1-Treiber
- 56b: weitere Anwendungen
- 56c: Firmwareupdate-Anwendungsprogramm
- 58: Speicherbereich

## Patentansprüche

1. Verfahren zum Aktualisieren von Programmdaten eines Geräts über eine Universal Printer Pre-and Post-Processing Interface Schnittstelle UP³I-Schnittstelle,
bei dem UP³I-Datenpakete mit Aktualisierungsdaten zusätzlich zu UP³I-Steuerdaten mit Hilfe einer Übertragungsschicht (50) zu einer UP³I-Schnittstelle des Geräts (42) übertragen werden,
die zur UP³I-Schnittstelle des Geräts (42) übertragenen Daten mit Hilfe einer ersten Verarbeitungsschicht (52) als UP³I-Datenpakete interpretiert werden und die UP³I-Datenpakete mit Hilfe einer zweiten Verarbeitungsschicht (56) weiterverarbeitet werden,
die übertragenen Aktualisierungsdaten einem Ladeprogramm (56c) der zweiten Verarbeitungsschicht (56) zugeführt werden, wobei die Programmdaten des Gerätes (42) oder ein Teil dieser Programmdaten mit Hilfe der Aktualisierungsdaten durch das Ladeprogramm (56c) aktualisiert werden,
und bei dem die aktualisierten Programmdaten vom Gerät (42) abgearbeitet werden.

2. Verfahren nach Anspruch 1, **dadurch gekennzeichnet, dass** die Aktualisierungsdaten Programmdaten umfassen, mit deren Hilfe im Gerät (42) gespeicherte Programmdaten beim Aktualisieren durch die übertragenen Aktualisierungsdaten oder durch einen Teil der übertragenen Aktualisierungsdaten ersetzt und/oder geändert werden und/oder
dass die aktualisierten Programmdaten erst nach einem automatisch initiierten Neustart des Gerätes (42) abgearbeitet werden.

3. Verfahren nach einem der vorhergehenden Ansprüche, **dadurch gekennzeichnet, dass** die Aktualisierungsdaten zu einem UP³I-Schnittstellencontroller (42b) des Geräts (42) übertragen werden.

4. Verfahren nach einem der vorhergehenden Ansprüche, **dadurch gekennzeichnet, dass** das Ladeprogramm (56c) ein Ladeprogramm zum automatischen Ersetzen der Programmdaten oder eines Teils der Programmdaten des Gerätes (42) durch die oder einen Teil der übertragenen Aktualisierungsdaten ist.

5. Verfahren nach einem der Ansprüche 1 bis 4, **dadurch gekennzeichnet, dass** die Programmdaten des Geräts (42) in einem PROM-Speicher des Geräts (42) gespeichert sind, und dass nur die Teile der im PROM-Speicherbereich gespeicherten Programmdaten eines Programmelements durch die entsprechenden in den Aktualisierungsdaten enthaltenen Programmdaten ersetzt werden, die von den im PROM-Speicher gespeicherten Programmdaten abweichen.

6. Verfahren nach einem der vorhergehenden Ansprüche, **dadurch gekennzeichnet, dass** zwischen der ersten Verarbeitungsschicht (52) und der zweiten Verarbeitungsschicht (56) eine weitere dritte Verarbeitungsschicht (54) vorgesehen ist, mit deren Hilfe eine Handhabung der UP³I-Datenpakete realisiert wird,
wobei mit Hilfe der dritte Verarbeitungsschicht (54) die UP³I-Datenpakete entsprechend ihrer Kennzeichnung einzelnen Anwendungsprogrammen (56a, 56b, 56c) der zweiten Verarbeitungsschicht 56 zuordnet werden,
wobei durch die dritte Verarbeitungsschicht 56 überprüft wird, ob die in den UP³I-Datenpaketen enthaltenen Daten Aktualisierungsdaten zum Aktualisieren von Programmdaten des Geräts (42) enthalten, und
wobei die Aktualisierungsdaten der UP³I-Datenpakete durch die dritte Verarbeitungsschicht (54), einem Ladeprogramm (56c) zum Aktualisieren der Programmdaten eines zweiten Programmelements zugeführt werden, wenn beim Überprüfen festgestellt worden ist, dass diese UP³I-Datenpakete Aktualisierungsdaten enthalten.

7. Verfahren nach einem der vorhergehenden Ansprüche, **dadurch gekennzeichnet, dass** die Aktualisierungsdaten mit Hilfe von nicht-gerätespezifischen UP³I-Datenpaketen übertragen werden.

8. Verfahren nach einem der vorhergehenden Ansprüche, **dadurch gekennzeichnet, dass** die Programmdaten Firmwaredaten und/oder Programmdaten einer Software-Applikation umfassen, wobei die Software-Applikation mindestens ein Steuerungsprogramm und/oder ein Steuerungsprogrammbaustein des Gerätes (42) umfasst.

9. Verfahren nach einem der vorhergehenden Ansprüche, **dadurch gekennzeichnet, dass** das Gerät (42) einen UP³I-Schnittstellencontroller einer UP³I-Schnittstelle umfasst, wobei die in einem Speicherbereich des UP³I-Schnittstellencontrollers (42b) gespeicherten Programmdaten mit Hilfe der übertragenen Aktualisierungsdaten aktualisiert werden oder dass das Gerät (42) mit einer UP³I-Schnittstelle über eine Datenübertragungsstrecke verbunden ist.

10. Anordnung zum Aktualisieren von Programmdaten eines Geräts über eine Universal Printer Pre- and Post-Processing Interface Schnittstelle, UP³I-Schnittstelle,
mit einer Datenquelle, die Aktualisierungsdaten bereitstellt,
mit einer Datenverbindung (22), die die Datenquelle und die UP³I-Schnittstelle zum Übertragen der bereitgestellten
Aktualisierungsdaten mit Hilfe von UP³I-Datenpaketen zur UP³I-Schnittstelle des Gerätes (42) verbindet, wobei die Übertragung der UP³I-Datenpakete mit Hilfe einer Übertragungsschicht (50) erfolgt,
wobei die UP³I-Schnittstelle eine erste Verarbeitungsschicht (52) zum Interpretieren der übertragenen Daten als UP³I-Datenpakete aufweist und wobei die UP³I-Schnittstelle mindestens eine zweite Verarbeitungsschicht (56) zum Weiterverarbeiten der UP³I-Datenpakete aufweist,
wobei die zweite Verarbeitungsschicht (56) ein Ladeprogramm (56c) aufweist, das die Programmdaten des Geräts (42) oder einen Teil dieser Programmdaten mit Hilfe der durch nicht-gerätespezifische UP³I-Datenpakete übertragenen Aktualisierungsdaten automatisch aktualisiert, und
wobei das Gerät (42) die aktualisierten Programmdaten abarbeitet.

11. Anordnung nach Anspruch 10, **dadurch gekennzeichnet, dass** die Aktualisierungsdaten Programmdaten umfassen, mit deren Hilfe das Ladeprogramm (56c) im Gerät (42) gespeicherte Programmdaten beim Aktualisieren durch die übertragenen Aktualisierungsdaten oder durch einen Teil der übertragenen Aktualisierungsdaten ersetzt und/oder ändert und/oder
dass das Gerät (42) die aktualisierten Programmdaten erst nach einem vom Ladeprogramm (56c) automatisch initiierten Neustart des Gerätes (42) abarbeitet.

12. Anordnung nach einem der vorhergehenden Ansprüche 10 oder 11, **dadurch gekennzeichnet, dass** das Ladeprogramm (56c) zum automatischen Ersetzen der Programmdaten oder eines Teils der Programmdaten des Gerätes (42) durch die oder einen Teil der übertragenen Aktualisierungsdaten dient.

13. Anordnung nach einem der vorhergehenden Ansprüche 10 bis 12, **dadurch gekennzeichnet, dass** das Ladeprogramm (56c) von einer Datenverarbeitungseinheit der UP³I-Schnittstelle oder von einer mit der UP³I-Schnittstelle verbundenen Datenverarbeitungseinheit abgearbeitet wird.

14. Anordnung nach einem der vorhergehenden Ansprüche 10 bis 13, **dadurch gekennzeichnet, dass** die Datenverbindung (22) einen Datenbus (22) aufweist, wobei die Datenquelle über mindestens eine weitere UP³I-Schnittstelle mit dem Datenbus (22) verbunden ist.

15. Computerprogrammprodukt, umfassend Befehle und Daten in codierter Form, die nach dem Laden der Programmdaten ein Datenverarbeitungssystem veranlassen, Verfahren nach einem der Ansprüche 1 bis 9 durchzuführen.

## Claims

1. A method for updating program data of a device via a universal printer pre- and post-processing interface, UP³I interface,
in which UP³I data packets with updating data are transmitted in addition to UP³I control data by means of a transmission layer (50) to an UP³I interface of the device (42),
the data transmitted to the UP³I interface of the device (42) are interpreted by means of a first processing layer (52) as UP³I data packets, and the UP³I data packets are further processed by means of a second processing layer (56),
the transmitted updating data are fed to a loading program (56c) of the second processing layer (56), wherein the program data of the device (42) or a part of these program data are updated by means of the updating data by the loading program (56c),
and in which the updated program data are executed by the device (42).

2. The method according to claim 1, **characterized in that** the updating data comprise program data, by means of which program data stored in the device (42) are replaced and/or amended during updating by the transmitted updating data or by a part of the transmitted updating data, and/or
that the updated program data are only executed after an automatically initiated restart of the device (42).

3. The method according to one of the preceding claims, **characterized in that** the updating data are transmitted to a UP³I interface controller (42b) of the device (42).

4. The method according to one of the preceding claims, **characterized in that** the loading program (56c) is a loading program for the automatic replacement of the program data or a part of the program data of the device (42) by the or a part of the transmitted updating data.

5. The method according to one of the claims 1 to 4, **characterized in that** the program data of the device (42) are stored in a PROM memory of the device (42) and that only those parts of the program data of a program element stored in the PROM memory area are replaced by the corresponding program data contained in the updating data which differ from the program data stored in the PROM memory.

6. The method according to one of the preceding claims, **characterized in that** between the first processing layer (52) and the second processing layer (56) a further third processing layer (54) is provided, by means of which a handling of the UP³I data packets is implemented, wherein by means of the third processing layer (54) the UP³I data packets are allocated to individual application programs (56a, 56b, 56c) of the second processing layer (56) in accordance with their identification,
wherein it is checked by the third processing layer (56) whether the data contained in the UP³I data packets contain updating data for updating program data of the device (42), and
wherein the updating data of the UP³I data packets are fed through the third processing layer (54) to a loading program (56c) for updating the program data of a second program element when it has been determined in the check that these UP³I data packets contain updating data.

7. The method according to one of the preceding claims, **characterized in that** the updating data are transmitted by means of non-device-specific UP³I data packets.

8. The method according to one of the preceding claims, **characterized in that** the program data comprise firmware data and/or program data of a software application, wherein the software application comprises at least one control program and/or a control program module of the device (42).

9. The method according to one of the preceding claims, **characterized in that** the device (42) comprises an UP³I interface controller of an UP³I interface, wherein the program data stored in a memory area of the UP³I interface controller (42b) are updated by means of the transmitted updating data or that the device (42) is connected to a UP³I interface via a data transmission path.

10. An arrangement for updating program data of a device via an universal printer pre- and post-processing interface, UP³I interface,
with a data source providing updating data,
with a data connection (22) which connects the data source and the UP³I interface for transmitting the provided updating data by means of UP³I data packets to the UP³I interface of the device (42), wherein the transmission of the UP³I data packets takes place by means of a transmission layer (50),
wherein the UP³I interface has a first processing layer (52) for interpreting the transmitted data as UP³I data packets and wherein the UP³I interface has at least a second processing layer (56) for further processing the UP³I data packets,
wherein the second processing layer (56) has a loading program (56c) which automatically updates the program data of the device (42) or a part of these program data by means of the updating data transmitted by non-device-specific UP³I data packets, and
wherein the device (42) executes the updated program data.

11. The arrangement according to claim 10, **characterized in that** the updating data comprise program data, by means of which the loading program (56c) replaces and/or amends program data stored in the device(42) during updating by the transmitted updating data or by a part of the transmitted updating data, and/or
that the device (42) executes the updated program data only after a restart of the device (42) automatically initiated by the loading program (56c).

12. The arrangement according to one of the preceding claims 10 or 11, **characterized in that** the loading program (56c) serves to automatically replace the program data or a part of the program data of the device (42) by the or a part of the transmitted updating data.

13. The arrangement according to one of the preceding claims 10 to 12, **characterized in that** the loading program (56c) is executed by a data processing unit of the UP³I interface or by a data processing unit connected to the UP³I interface.

14. The arrangement according to one of the preceding claims 10 to 13, **characterized in that** the data connection (22) has a data bus (22), wherein the data source is connected to the data bus (22) via at least one further UP³I interface.

15. A computer program product, comprising commands and data in coded form which after loading the program data cause a data processing system to perform a method according to one of the claims 1 to 9.

## Revendications

1. Procédé destiné à l'actualisation de données de programme d'un appareil par une interface universelle de pré- et de post-traitement d'imprimante, ou interface UP³I,
dans lequel des paquets de données UP³I sont transmis avec des données d'actualisation en plus de données UP³I à l'aide d'une face de transmission (50) à une interface UP³I de l'appareil (42),
les données transmises à l'interface UP³I de l'appareil (42) sont interprétées à l'aide d'une première couche de traitement (52) en tant que paquets de données UP³I et les paquets de données UP³I sont post-traités à l'aide d'une deuxième couche de traitement (56),
les données d'actualisation transmises sont fournies à un programme de chargement (56c) de la deuxième couche de traitement (56) de l'appareil (42) ou une partie des données de programme sont actualisées à l'aide des données d'actualisation par le programme de chargement (56c), et
dans lequel les données de programme actualisées sont exécutées par l'appareil (42).

2. Procédé selon la revendication 1, **caractérisé en ce que** les données d'actualisation comprennent des données de programme à l'aide desquelles des données de programme stockées dans l'appareil (42) sont remplacées et/ou sont modifiées lors de l'actualisation par les données d'actualisation transmises ou par une partie des données d'actualisation transmises et/ou en ce que les données de programme actualisées ne sont exécutées qu'après un redémarrage déclenché automatiquement de l'appareil (42).

3. Procédé selon l'une quelconque des revendications précédentes, **caractérisé en ce que** les données d'actualisation sont transmises à un contrôleur d'interface UP³I (42b) de l'appareil (42).

4. Procédé selon l'une quelconque des revendications précédentes, **caractérisé en ce que** le programme de chargement (56c) est un programme de chargement destiné au remplacement automatique des données de programme ou d'une partie des données de programme de l'appareil (42) par les données d'actualisation transmises ou une partie de celles-ci.

5. Procédé selon l'une quelconque des revendications 1 à 4, **caractérisé en ce que** les données de programme de l'appareil (42) sont stockées dans une mémoire PROM de l'appareil (42) et **en ce que** seule une partie des données de programme stockées dans une zone de mémoire PROM d'un élément de programme est remplacée par celles des données de programme correspondantes, contenues dans les données d'actualisation, qui sont différentes des données de programme stockées dans la mémoire PROM.

6. Procédé selon l'une quelconque des revendications précédentes, **caractérisé en ce qu'**il est prévu entre la première couche de traitement (52) et la deuxième couche de traitement (56) une troisième couche de traitement (54) supplémentaire à l'aide de laquelle une manipulation des paquets de données UP³I est réalisée,
dans lequel les paquets de données UP³I sont associés d'une manière qui correspond à leur identification à des programmes d'application (56a, 56b, 56c) de la deuxième couche de traitement (56) à l'aide de la troisième couche de traitement (54),
dans lequel il est vérifié par la troisième couche de traitement (56) si les données contenues dans les paquets de données UP³I contiennent des données d'actualisation destinées à l'actualisation de données de programme de l'appareil (42), et
dans lequel les données d'actualisation des paquets de données UP³I sont fournies par l'intermédiaire de la troisième couche de traitement (54) à un programme de chargement (56c) pour actualiser les données de programme d'un deuxième élément de programme lorsqu'il a été établi lors de la vérification que lesdits paquets de données UP³I contiennent des données d'actualisation.

7. Procédé selon l'une quelconque des revendications précédentes, **caractérisé en ce que** les données d'actualisation sont transmises à l'aide de paquets de données UP³I non spécifiques de l'appareil.

8. Procédé selon l'une quelconque des revendications précédentes, **caractérisé en ce que** les données de programme comprennent des données de micrologiciel et/ou des données de programme d'une application logicielle, dans lequel l'application logicielle comprend au moins un programme de commande et/ou un composant de programme de commande de l'appareil (42).

9. Procédé selon l'une quelconque des revendications précédentes, **caractérisé en ce que** l'appareil (42) comprend un contrôleur d'interface UP³I d'une interface UP³I, dans lequel les données de programme stockées dans une zone de mémoire du contrôleur d'interface UP³I (42b) sont actualisées à l'aide des données d'actualisation transmises ou **en ce que** l'appareil (42) est connecté à l'interface UP³I par l'intermédiaire d'une voie de transmission de données.

10. Système destiné à l'actualisation de données de programme d'un appareil par une interface universelle de pré- et de post-traitement d'imprimante, ou interface UP³I, comportant
une source de données qui fournit des données d'actualisation,
une liaison de données (22) qui relie la source de données et l'interface UP³I pour la transmission des données d'actualisation fournies à l'aide de paquets de données UP³I à l'interface UP³I de l'appareil (42), dans lequel la transmission des paquets de données UP³I s'effectue à l'aide d'une couche de transmission (50), dans lequel l'interface UP³I comporte une première couche de traitement (52) destinée à l'interprétation des données transmises en tant que paquets UP³I et dans lequel l'interface UP³I comporte au moins une deuxième couche de traitement (56) destinée au post-traitement des paquets de données UP³I,
dans lequel la deuxième couche de traitement (56) comporte un programme de chargement (56c) qui actualise automatiquement les données de programme de l'appareil (42) ou une partie desdites données de programme à l'aide des données d'actualisation transmises par l'intermédiaire de paquets de données UP³I non spécifiques de l'appareil, et
dans lequel l'appareil (42) traite les données de programme actualisées.

11. Système selon la revendication 10, **caractérisé en ce que** les données d'actualisation comprennent des données de programme à l'aide desquelles le programme de chargement (56c) remplace et/ou modifie des données de programme stockées dans l'appareil (42) lors de l'actualisation par les données d'actualisation transmises ou par une partie des données d'actualisation transmises et/ou
**en ce que** l'appareil (42) n'exécute les données de programme actualisées qu'après un redémarrage de l'appareil (42) déclenché automatiquement par le programme de chargement (56c).

12. Système selon l'une quelconque des revendications 10 ou 11, **caractérisé en ce que** le programme de chargement (56c) est utilisé pour le remplacement automatique des données de programme ou d'une partie des données de programme de l'appareil (42) par les données d'actualisation transmises ou une partie de celles-ci.

13. Système selon l'une quelconque des revendications 10 à 12, **caractérisé en ce que** le programme de chargement (56c) est exécuté par une unité de traitement de données de l'interface UP³I ou par une unité de traitement de données connectée à l'interface UP³I.

14. Système selon l'une quelconque des revendications 10 à 13, **caractérisé en ce que** la liaison de données (22) comporte un bus de données (22), dans lequel la source de données est connectée au bus de données (22) par l'intermédiaire d'au moins une autre interface UP³I.

15. Produit de programme informatique, comprenant des instructions et des données sous forme codée qui, après le chargement des données de programme, amènent un système de traitement de données à mettre en oeuvre le procédé selon l'une quelconque des revendications 1 à 9.
